Europäisches Patentamt

European Patent Office

Office européen des brevets

(11) Publication number: **0 105 261**
**B1**

# EUROPEAN PATENT SPECIFICATION

(45) Date of publication of patent specification: **06.07.88**

(21) Application number: **82901661.7**

(22) Date of filing: **14.04.82**

(86) International application number:
**PCT/US82/00461**

(87) International publication number:
**WO 83/03674 27.10.83 Gazette 83/25**

(51) Int. Cl.⁴: **G 01 N 23/20, H 05 G 1/00,**
**G 21 G 4/00**

(54) **PROVIDING X-RAYS.**

(43) Date of publication of application:
**18.04.84 Bulletin 84/16**

(45) Publication of the grant of the patent:
**06.07.88 Bulletin 88/27**

(84) Designated Contracting States:
**AT BE CH DE FR GB LI LU NL SE**

(56) References cited:
**US-A-2 640 948**
**US-A-2 899 556**
**US-A-3 602 686**
**US-A-3 746 860**
**US-A-3 870 882**
**US-A-4 058 486**
**US-A-4 091 256**
**US-A-4 119 855**
**US-A-4 143 275**
**US-A-4 317 994**

**OPTICS COMMUNICATIONS, vol. 30, no. 2,**
**August 1979, pages 219-223, Amsterdam, NL;**
**S.G. DINEV et al.: "X-ray emission from a laser**
**irradiated target in the presence of high**
**electric field"**

(73) Proprietor: **BATTELLE DEVELOPMENT**
**CORPORATION**
**505 King Avenue**
**Columbus Ohio 43201 (US)**

(72) Inventor: **MALLOZZI, Philip J.**
**1783 Home Road**
**Delaware, OH 43015 (US)**
Inventor: **EPSTEIN, Harold M.**
**2499 Stafford Place**
**Columbus, OH 43209 (US)**

(74) Representative: **Dousse, Blasco et al**
**7, route de Drize**
**CH-1227 Carouge/Genève (CH)**

Courier Press, Leamington Spa, England.

## Description

Field

This invention relates to apparatus for providing X-rays to an object that may be in an ordinary environment such as air at approximately atomospheric pressure.

Apparatus according to the present invention is especially useful for applications wherein it is expensive, time consuming, or otherwise inconvenient to move objects that are to receive soft X-rays into and out of a special environment, such as a vacuum chamber in which the X-rays are produced. Typical applications of this type include laser produced X-ray systems for high resolution lithography, for extended X-ray absorption fine structure (EXAFS) spectroscopy, and for X-ray microscopy.

Background

X-rays usually are produced in a vacuum, but for many purposes it is desirable to apply them in air. For soft X-rays, especially those having photon energies of less than about 5 keV, a problem arises in bringing the X-rays from the vacuum into air, because a window that is thick enough and strong enough to withstand the pressure difference between the vacuum and the air is opaque to the X-rays, except in very small windows. The problem is especially serious in X-ray lithography, where it is desirable to illuminate large areas.

US—A—4,119,855 discloses a non vacuum soft X-ray lithographic source having an electron gun in a baffled enclosure at less than atmospheric pressure. This gun projects the electrons to strike a target with a velocity which generates soft X-rays. The target as well as the mask and substrate for lithographing by the soft X-rays are in an open chamber at substantially atmospheric pressure in which is generated a gaseous environment which is only slightly dispersive and absorptive of the soft X-rays, such as helium. On one hand this chamber is connected to a gas source and on the other hand it is open to the atmosphere. This type of solution does not preclude other gases from entering this open chamber. The mask and substrate being in the open chamber, this document does not relate to an apparatus for providing X-rays to an object that is in an ordinary environment such as air at atmospheric pressure.

US—A—2,640,948 discloses an apparatus for utilizing a beam of high energy electrons provided with a plurality of vacuum-pumping evacuating chambers below to a main vacuum chamber. These vacuum pumping system evacuating chambers are separated from each other by a small diameter orifice or tube that is large enough to permit ready passage of the said beam of high energy electrons, but small enough in diameter to allow the vacuum pumping speed at the chambers to be low. The plurality of pumping systems act to maintain degrees of vacuum that are progressively higher from atmospheric pressure back to the most nearly complete vacuum of the main chamber.

This document applies only to tiny orifices or tubes for passing beams of electrons, but not for passing X-rays which fan out in a cone, with openings having diameters more and more large when the distance from the apex of the cone increases.

The above cited prior art does not suggest any solution for providing X-rays to an object in an ordinary environment such as air at atmospheric pressure.

The present invention provide simple, inexpensive, convenient means for overcoming the problem.

It is shown in United States Patent 4,058,486, November 15, 1977, of P. J. Mallozzi, H. M. Epstein, R. G. Jung, D. C. Applebaum, B. P. Fairand, and W. J. Gallagher, for Producing X-rays, that an intense point source of X-rays can be generated by focusing a laser beam onto a solid target. Neodymium laser light focused onto a solid slab target has been converted into X-rays with an efficiency greater than 25 percent, with several tens of joules of X-rays emanating from an essentially point source (about 100 $\mu$m (microns) diameter) in a nanosecond. The X-ray pattern produced with iron targets irradiated with about 100-joule laser pulses at a 45 degree angle of incidence is substantially omnidirectional. The conversion efficiency of greater than 25 percent refers to X-rays which are radiated away from the slab and pass perpendicularly through 3000 Angstroms of plastic (paraline) coated with 2000 Angstroms of aluminum. This conversion efficiency is thus a lower bound and refers only to the portion of the spectrum above about 300 electron volts. Most of the observed X-rays lie between about 0.3 and 1.5 keV, with a small but useful fraction having energies as high as 10 to 100 keV. In a densitometer tracing of a bent crystal spectrograph taken with a KAP crystal, the radiation appears to be mostly lines in the spectral interval of about 0.7 to 1.2 keV. The unusual sharpness of the spectral detail is due to the tiny dimensions of the source. This novel point source of X-rays provides a spectrum tuneable throughout a range of about 0.1 to 100 keV.

Apparatus according to the present invention typically employs X-ray producing means of the type described above. It may, however, use other somewhat similar means, such as equipment that uses an electron beam, rather than a laser beam, for producing the X-rays.

Disclosure

The apparatus of the invention is as set out in claims 1 and 2. Further embodiments are set out in claims 3—26.

Drawings

Figure 1 is a schematic plan view of typical apparatus according to the present invention.

Figure 2 is a similar view of a typical embodiment of the invention for obtaining EXAFS data of a material.

Figure 3 is a similar view of other typical apparatus according to the present invention.

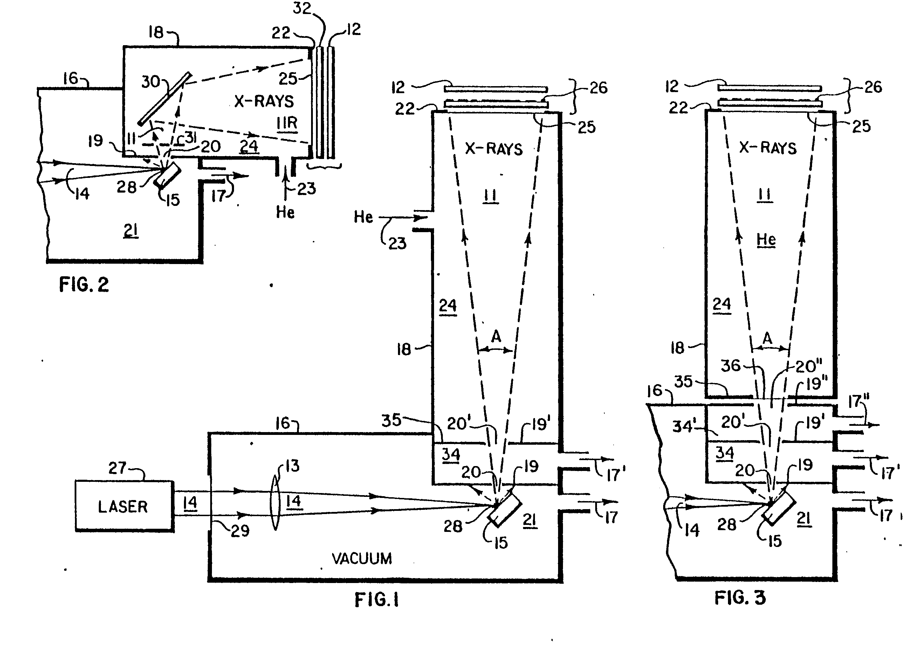

In Figures 2 and 3 the leftmost portion of the apparatus is omitted, to save space, since it is the same as in Figure 1.

## Carrying out the invention

Referring to the drawings, and especially to Figures 1 and 3, typical apparatus according to the present invention for providing X-rays 11 to an object 12 that may be in an ordinary environment such as air at approximately atmospheric pressure comprises means such as a lens 13 for directing energy 14 onto a target 15 to produce X-rays 11 of a selected spectrum and intensity at the target 15, a substantially fluid-tight first enclosure 16 around the target 15, means as indicated by the arrow 17 (such as a vacuum pump, not shown) for reducing the quantity, and thus the pressure, of gas in the first enclosure 16 to maintain the pressure therein substantially below atmospheric pressure (typically less than about 1 torr), a substantially fluid-tight second enclosure 18, adjacent to the first enclosure 16, containing a gas 24 that is highly transparent to X-rays 11, to the substantial exclusion of other gases, a wall 19 in the first enclosure 16 having therein an opening 20 large enough to permit X-rays 11 to pass through it (20) and yet small enough that the pressure reducing means can evacuate gas 21 from the first enclosure 16 at least as fast as it enters through the opening 20 at the desired pressure, the target 15 being located close enough to the opening 20 and so positioned as to emit a substantial portion of the X-rays 11 produced toward the opening 20, to pass through it (20), a near wall 35 in the second enclosure 18 having therein a portion 20' (Figure 1) or 36 (Figure 3) that is highly transparent to X-rays 11 and positioned adjacent to the opening 20 in the wall 19 of the first enclosure 16, to permit the X-rays 11 passing through the opening 20 to travel on through the transparent portion 20' or 36 of the near wall 35 toward a far wall 22 of the second enclosure 18 located opposite the near wall 35, and the far wall 22 of the second enclosure 18 to which the X-rays 11 travel having a portion 25 that is highly transparent to them (11), so that the object 12 to which the X-rays 11 are to be provided may be located outside the second enclosure 18 and adjacent to the transparent portion 25 of the far wall 22 and thus receive the X-rays 11 substantially unimpeded by air or other undesired intervening matter.

Where only specific regions of the object 12 are to receive the X-rays 11, as in X-ray lithography, a mask 26 may be placed between the highly transparent portion 25 of the wall 22 and the object 12 to block the X-rays proceeding toward the other regions of the object 12.

The apparatus typically comprises also a substantially fluid-tight intermediate enclosure 34 adjoining the first enclosure 16, having an inner wall 19 of which a portion is in common with a portion of the wall 19 of the first enclosure 16 having the opening 20 therein, having an outer wall 19' approximately parallel to the common wall 19 and with a similar opening 20' therein between and registering with the opening 20 in the common wall 19 and the transparent portion 20' or 36 of the near wall 35 of the second enclosure 18, to permit X-rays 11 to pass therethrough and to travel on to the far wall 22 of the second enclosure 18; and means, as indicated at 17' for reducing the quantity, and thus the pressure, of gas in the intermediate enclosure 34 to maintain the pressure therein between the pressure in the first enclosure 16 and the pressure in the second enclosure 18; the opening 20' in the outer wall being small enough that the pressure reducing means can evacuate gas from the intermediate enclosure 34 at least as fast as it enters through the opening 20' at the desired pressure.

The apparatus typically comprises also at least one additional and similar intermediate enclosure, such as 34' (Figure 3), between the first enclosure 16 and the second enclosure 18, each pair of adjoining intermediate enclosures, such as 34, 34', being located on opposite sides of a common wall, such as 19', and opening therein, such as 20', and all openings, such as 20', 20'', being between and registering with the opening 20 in the wall 19 of the first enclosure 16 and the transparent portion 36 of the near wall 35 of the second enclosure 18; and means, as indicated at 17'', for reducing the quantity, and thus the pressure, of gas in each additional intermediate enclosure, such as 34', to maintain the pressure therein between the pressures in the adjoining enclosures; the opening, such as 20', 20'' in each wall, such as 19', 19'', being small enough that the pressure reducing means can evacuate gas from each intermediate enclosure, such as 34, 34', at least as fast as it enters through the opening, such as 20', 20'', at the desired pressure.

The pressure in each intermediate enclosure, such as 34, 34', typically is maintained approximately midway, logarithmically, between the pressures on the opposite sides of the approximately parallel walls 19, 19', 19'' thereof. For example, in apparatus as shown in Figure 3, typical pressures are in the order of about 1 torr in the first enclosure 16, about 10 torr in the intermediate enclosure 34, and about 100 torr in the additional intermediate enclosure 34'. The space between the outer wall 19'' of the additional intermediate enclosure 34' and the near wall 35 of the second enclosure 18 (typically about 1/10 to 2 millimeters), is of course at atmospheric pressure, about 760 torr. As indicated by the arrows 17', 17'', means such as vacuum pumps (not shown) can maintain the proper pressures in the intermediate enclosures 34, 34'. Where more than one intermediate enclosure 34, 34' is provided, a differential evacuation system of the type used for the emission of electron beams into the atmosphere may be desirable.

The spacing between successive approximately parallel walls 19, 19', 19'', 35 should be large enough to avoid streaming of the gas therebetween. Typically the spacing between the inner wall 19 and the outer wall 19' of the first intermediate enclosure 34 is about 2 to 10 millimeters, the spacing between the approximately parallel walls 19', 19'', of the first additional intermediate enclosure 34' is about 1/2 to 5 millimeters, and the spacing between the approximately parallel walls of each further additional intermediate enclosure (or space, such as between the walls 19'' and 35 in Figure 3) is about 1/10 to 2 millimeters. The openings 20, 20', 20'' (and the window 36) typically are large enough to permit X-rays to pass through in a cone having a total apex angle, A, of about 1 to 10 degrees.

In some typical embodiments of the invention, as in Figure 3, the second enclosure 18 comprises a light gas drift tube. Typically the gas in the drift tube 18 is helium, hydrogen, or a hydrocarbon; preferably helium; at substantially atmospheric pressure. The distance from the near wall 35 to the far wall 22 in a typical drift tube 18 is about 1/2 to 5 meters, commonly about 1/2 to 2 meters. Typically the transparent portion 36 of the near wall 35 and the transparent portion 25 of the far wall 22 in the drift tube 18 comprises a thin foil that typically comprises essentially beryllium or a low-Z plastic material. Preferably the atomic number, Z, of the foil material is not more than about 8. The thickness of the foil typically is about 2 to 20 micrometers.

In some typical embodiments of the invention, as in Figure 1, the transparent portion of the near wall 35 of the second enclosure 18 comprises an opening 20' therein, and the apparatus comprises also means as indicated by the arrow 23 (such as a pump, not shown) for conveying the transparent gas 24 to the second enclosure 18 at least as fast as it leaves through the opening 20', and thus to substantially preclude other gases from entering the second chamber 18. Typically the gas in the second enclosure, at least in the vicinity of the transparent portion of the far wall thereof, is maintained at a pressure of about 0.9 to 1 atmosphere.

Typically the gas 24 conveyed into the second enclosure 18 is helium, hydrogen or a hydrocarbon, such as methane; maintained at a pressure of about 0.9 to 1 atmosphere, at least in the vicinity of the transparent portion 25 of the far wall 22 thereof. Preferably the gas 24 comprises essentially helium, which is known to be highly transparent to X-rays as well as substantially inert.

Typically the transparent portion 25 of the far wall 22 of the second enclosure 18 comprises a thin foil 25 that typically comprises essentially beryllium or a low-Z plastic material. The thickness of the foil 25 typically is about 2 to 20 micrometers. Other materials, preferably having atomic numbers, Z, of not more than about 8, may also be used. Where a less transparent material is used it must be very thin.

Where the pressure of the gas 24 in the second enclosure 18 is maintained at approximately atmospheric pressure, the transparent portion 25 of the far wall 22 may be very thin, because the pressure on each side of it is approximately the same. It may even comprise only a gas curtain, rather than a solid material; or the mask 26 in Figure 1 or the sample 32 in Figure 2 may be placed against the thick "frame" formed by the wall 22 to substantially separate the gas 24 inside the second enclosure 18 from the air around it. Where an adjacent mask or sample is not used, the object 12 may be placed against the wall 22 to substantially separate the gas 24 inside the second enclosure 18 from the air around it.

Where the gas 24 in the second enclosure 18, at least in the vicinity of the transparent portion 25 of the far wall 22 thereof, is maintained at approximately the pressure of the ambient air, the transparent portion 25 of the wall 22 of the second enclosure 18 may comprise an opening therein; and the gas 24 inside the second enclosure 18 can be substantially separated from the air around it; either by a gas curtain passing along the opening at 25; or by the object 12 to which the X-rays 11 are to be provided, or a component associated with the object 12 (such as the mask 26 in Figures 1 and 3 or the sample 32 in Figure 2), placed against the wall 22 and covering the opening at 25.

As is shown in Figure 2, typical apparatus according to the invention for obtaining EXAFS data of a material, comprises also spectral dispersive means such as a monochromator 30 in the second enclosure 18 so located as to receive X-rays 11 that pass through the opening and to direct the spectrally resolved X-rays 11R on toward the highly transparent portion 25 of the wall 22 adjacent to the object 12 to which the X-rays 11R are to be provided, and the object 12 typically comprises recording means such as a photographic film 12. Such apparatus typically comprises also means such as a support (not shown) for positioning a sample of material 31 in the optical path of the X-rays 11, 11R, either in the second enclosure 18 as indicated by the dashed line 31, or outside of the second enclosure 18 and between the highly transparent portion 25 of the wall 22 and the recording means 12, as indicated at 32. The latter position 32 usually is more convenient than positions (such as 31) in the second enclosure 18.

Typically the radiant energy 14 is directed to the target 15 in a single pulse in such manner as to produce soft X-rays 11 from the target 15 in a single pulse in such manner as to produce soft X-rays 11 from the target 15 suitable for obtaining the EXAFS spectrum of the material 32, which typically is an element having an atomic number of less than 40.

EXAFS apparatus as in Figure 2 may comprise also means for moving the surface of the target 15 typically in a rotating and advancing motion (not shown) to provide a helical locus of points on a cylindrical surface of the target 15 travelling through the location of the focal spot 28 where the laser light energy 14 strikes the surface. In such a case the energy 14 typically is directed to the moving target surface at 28 in a series of pulses in such manner as to produce soft X-rays 11 from the target 15 suitable for obtaining the EXAFS spectrum of the material 32.

The X-rays from the target 15 preferably comprise continuum radiation in a selected EXAFS spectral regime of the sample 32. Typically the target 15 comprises essentially an element having a continuum just above the L-lines that includes a selected EXAFS spectral regime of the sample 32. Or the target 15 may comprise a plurality of elements whose lines are spaced closely enough to form virtually a continuum in a selected EXAFS spectral regime of the sample 11. Such a target 15 typically comprises a mixture of elements of adjacent atomic numbers.

The radiant energy typically comprises a laser pulse 14 with a power density of at least about $10^{13}$ watts per square centimeter, and the target 15 typically comprises a solid (typically metal) surface, whereby a surface plasma is formed and raised to the kilovolt temperature regime. Some EXAFS can be obtained, however, in the ultraviolet and ultrasoft X-ray regime using lower power densities down to about $10^{11}$ watts per square centimeter. The laser pulse 14 typically is focused to strike the focal spot 28 on the target 15 about 1 to 200 micrometers in diameter.

Further typical and preferred details of apparatus of the type shown in Figure 2 for obtaining EXAFS data of a material are contained in United States Patent 4,317,994, March 2, 1982, of Philip J. Mallozzi, Harold M. Epstein, Robert E. Schwerzel, and Bernard E. Campbell, for Laser EXAFS.

The energy directing means typically comprises a lens 13 for directing energy 14, passing through a window 29 in the first enclosure 16, from a laser 27, onto the target 15, as by focusing the energy 14 onto a spot 28 on the target 15 having a diameter of about 1 to 200 micrometers. Typically the opening 20 in the common wall portion 19 is about 0.2 to 2 millimeters in diameter, and the distance between the opening 20 and the spot 28 on the target 15 is about 0.2 to 5 centimeters. The X-rays 11 produced at the target 15 typically have energies predominantly of about 0.3 to 2 keV.

As is explained in detail in the United States patent of Mallozzi et al, referred to in the Background section herein, a typical method of producing X-rays for use in the present invention comprises directing radiant energy from a laser onto a target, and conversion efficiency of at least about 3 percent is obtained by providing the radiant energy in a low-power precursor pulse of approximately uniform effective intensity focused onto the surface of the target for about 1 to 30 nanoseconds so as to generate an expanding unconfined coronal plasma having less than normal solid density throughout and comprising a low-density (underdense) region wherein the plasma frequency is less than the laser radiation frequency and a higher-density (overdense) region wherein the plasma frequency is greater than the laser radiation frequency and, about 1 to 30 nanoseconds after the precursor pulse strikes the target, a higher-power main pulse focused onto the plasma for about $10^{-3}$ to 30 nanoseconds and having such power density and total energy that the radiant energy is absorbed in the underdense region and conducted into the overdense region to heat it and thus to produce X-rays therefrom with the plasma remaining substantially below normal solid density and thus facilitating the substantial emission of X-rays in the form of spectral lines arising from nonequilibrium ionization states.

The target typically consists essentially of an element having a high atomic number Z, i.e. an atomic number Z greater than 10. Typically the target consists essentially or iron, calcium, chromium, nickel, aluminum, lead, tungsten, or gold.

The amplitude, duration, and shape of the precursor pulse typically are adjusted to control the intensity and spectral content of the X-rays. The precursor pulse typically comprises about 0.01 to 5 joules (about $10^{10}$ to $10^{12}$ watts per square centimeter) in about 1 to 30 nanoseconds, and strikes the target at an angle of about 20 to 70 degrees from its surface.

The main pulse typically comprises at least 0.1 joule, preferably about 10 to 200 joules in about 1 to 3 nanoseconds.

In a typical embodiment, the target consists essentially of iron and the duration of the precursor pulse is about 8 to 10 nanoseconds.

The electron density in the low-density region of the plasma typically is about $10^{16}$ to $10^{21}$ per cubic centimeter, and in the higher-density region about $10^{19}$ to $10^{25}$ per cubic centimeter. The radiant energy typically is focused onto a spot on the target having a diameter of about 1 to 1000 micrometers. The volume of the plasma typically is about $10^{-6}$ to $10^{-3}$ cubic centimeter, the thickness of the plasma in any direction being about 0.001 to 0.1 centimeter.

For low energy applications the X-rays are emitted predominantly in the form of spectral lines.

The radiant energy may be focused onto a spot on the target having a diameter of about 1 to 100 micrometers, generating a plasma of about the same diameter, to form substantially a point source of X-rays and thus to provide substantially the advantages of stimulated emission of X-rays.

In some embodiments of the invention the composition of the target and the temperature of the plasma are selected to provide a substantial amount of stimulated emission of X-rays.

In other embodiments X-rays are directed to impinge upon a fluorescent target so as to remove inner shell electrons from atoms thereof and thereby create a population inversion.

In a typical method of providing stimulated emission of X-rays by directing radiant energy onto a target to create by means of a pumping mechanism some upper and lower laser levels, the required population inversion is not established by the pumping mechanism alone, but by the combined action of the pumping mechanism and a quenching mechanism that extinguishes the lower laser level at a rate sufficient to establish and continuously maintain the inversion. The pumping mechanism typically comprises excitation by collisions of electrons and ions or by dielectronic recombination. The quenching mechanism typically comprises Auger transitions, Coster-Krönig transitions, or collisions. The radiant energy may be from a laser, or it may comprise a beam of electrons. The pumping mechanism may comprise a beam of electrons.

Applicability

Apparatus according to the present invention is especially useful for applications wherein it is expensive, time consuming, or otherwise inconvenient to move objects that are to receive soft X-rays into and out of a special environment, such as a vacuum chamber in which the X-rays are produced. Typical applications of this type include laser produced X-ray systems for high resolution lithography, for extended X-ray absorption fine structure (EXAFS) spectroscopy, and for X-ray microscopy.

X-rays usually are produced in a vacuum, but for many purposes it is desirable to apply them in air. For soft X-rays, especially those having photon energies of less than about 5 keV, a problem arises in bringing the X-rays from the vacuum into air, because a window that is thick enough and strong enough to withstand the pressure difference between the vacuum and the air is opaque to the X-rays, except in very small windows. The problem is especially serious in X-ray lithography, where it is desirable to illuminate large areas.

The present invention provides simple, inexpensive convenient means for overcoming the problem of providing X-rays to an object that may be in an ordinary environment such as air at approximately atmospheric pressure.

Apparatus according to this invention is useful and advantageous not only in X-ray lithography but also in laser EXAFS, and especially in fast EXAFS spectroscopy with a single pulse of laser-produced X-rays, or with a plurality of such pulses.

The technique of Extended X-ray Absorption Fine Structure (EXAFS) spectroscopy is becoming an increasingly important tool for the study of chemical structure in samples which lack long-range order, such as amorphous solids, solutions of biologically important materials, and gases. These studies have gained impetus in recent years by virtue of the availability of synchrotron radiation, which provides a continuous and intense spectrum of the soft X-rays required for EXAFS. A synchrotron, however, is an expensive, cumbersome source of X-rays, to which scientists must travel in order to perform their experiments. A laser X-ray source, on the other hand, is relatively compact, inexpensive, and simple to operate and maintain. Furthermore, there are a variety of novel EXAFS experiments which are inherently beyond the capabilities of synchrotron radiation sources. These experiments, which require short pulse width, intense fluxes of low-energy (<4 keV) X-rays, and/or a continuum or a closely packed spectral line structure, are ideally suited to laser-produced X-rays.

The EXAFS spectrum of aluminum has been measured with a nanosecond pulse of soft X-rays generated by a laser-produced plasma. This technique provides a practical alternative to synchrotron radiation for the acquisition of EXAFS data. It also provides a unique capability for the analysis of molecular structure in highly transient chemical species.

While the forms of the invention herein disclosed constitute presently preferred embodiments, many others are possible. It is not intended herein to mention all of the possible equivalent forms of ramifications of the invention.

**Claims**

1. Apparatus for providing X-rays to an object (26) that may be in an ordinary environment such as air at approximately atmospheric pressure, comprising

means (13) for directing energy into a target (15) to produce X-rays of a selected spectrum and intensity at the target,

a first enclosure (16) around the target (15),

means (17) for reducing the quantity, and thus the pressure, of gas in the first enclosure to maintain the pressure therein substantially below atmospheric pressure,

a second enclosure (18), adjacent to the first enclosure,

a wall (19) between said first and second enclosures (16, 18) having therein an opening (20) large enough to permit X-rays to pass through it and yet small enough that the pressure reducing means (17) can evacuate gas from the first enclosure (16) at least as fast as it enters through the opening (20) at the desired pressure,

means for conveying a highly transparent gas (23) to X-rays to the second enclosure (18) at least as fast as it leaves through said opening (20) with a pressure of about 0,9 to 1 atmosphere and thus maintaining this enclosure free from other gases

the target (15) being located close enough to the opening (20) and so positioned as to emit a substantial portion of the X-rays produced toward the opening, to pass through it, and be directed

toward a far wall (22) of the second enclosure (18) located remote from the wall (19) between said first and second enclosure, and

the far wall of the second enclosure, to which the X-rays travel, having a portion (25) that is highly transparent to them, so that the object (26) to which the X-rays are to be provided may be located outside the second enclosure (18) and adjacent to the transparent portion (25) of the far wall (22) and thus receive the X-rays substantially unimpeded by air or other undesired intervening matter.

2. Apparatus for providing X-rays to an object that may be in an ordinary environment such as air at approximately atmospheric pressure, comprising

means (13) for directing energy onto a target (15)

to produce X-rays of a selected spectrum and intensity at the target,

a first enclosure (16) around the target (15),

means (17) for reducing the quantity, and thus the pressure, of gas in the enclosure to maintain the pressure therein substantially below atmospheric pressure,

a fluid-tight drift tube (18), as second enclosure, adjacent to the first enclosure, substantially at atmospheric pressure, containing a gas that is highly transparent to X-rays, to the substantial exclusion of other gases,

a wall (19) in the first enclosure adjacent to said drift tube (18) having therein an opening large enough to permit X-rays to pass through it and yet small enough that the pressure reducing means can evacuate gas from the first enclosure (16) at least as fast as it enters through the opening (20) at the desired pressure,

the target being located close enough to the opening and so positioned as to emit a substantial portion of the X-rays produced toward the opening, to pass through it,

a near wall (35) in the drift tube (18) having a thin foil (36) that is highly transparent to X-rays and positioned adjacent to the opening (20) in the wall of the first enclosure (16), to permit the X-rays passing through the opening (20) to travel on through the thin foil (36) of the near wall (35) toward a far wall (22) of the drift tube (18) located opposite the near wall (35), and

the far wall (22) of the drift tube, to which the X-rays travel, having a thin foil (25) that is highly transparent to them, so that the object (26) to which the X-rays are to be provided may be located outside the second enclosure and adjacent to the thin foil (25) of the far wall (22) and thus receive the X-rays substantially unimpeded by air or other undesired intervening matter.

3. Apparatus as in Claim 1 or 2, comprising also at least an intermediate enclosure (34) adjoining the first enclosure (16), having an inner wall of a portion (19) is in common with a portion of the wall of the first enclosure (16) having the opening (20) therein, having an outer wall (19') approximately parallel to the common wall (19) and with a similar opening (20') therein between and registering with the opening (20) in the common wall (19), to permit X-rays to pass therethrough and to travel on to the far wall (22) of the second enclosure (18); and means (17') for reducing the quantity, and thus the pressure, of gas in the intermediate enclosure (34) to maintain the pressure therein between the pressure in the first enclosure (16) and the pressure outside of the outer wall (19'); the opening (20') in the outer wall (19') being small enough that the pressure reducing means (17') can evacuate gas from the intermediate enclosure (34) at least as fast as it enters through the opening (20') at the desired pressure.

4. Apparatus as in Claim 3, comprising also at least one additional and similar intermediate enclosure (34') between the first and second enclosures (16, 18), each pair of adjoining intermediate enclosures being located on opposite sides of a further common wall (19') and opening therein, and all openings (20', 20'') being between and registering with the opening (20) in the wall (19) of the first enclosure (16) and the transparent portion (36) of the near wall (35) of the second enclosure (18); and means (17'') for reducing the quantity, and thus the pressure, of gas in each additional intermediate enclosure to maintain the pressure therein between the pressures in the adjoining enclosures; the opening (20', 20'') in each wall being small enough that the pressure reducing means can evacuate gas from each intermediate enclosure (34') at least as fast as it enters through the opening at the desired pressure.

5. Apparatus as in Claim 4, wherein the pressure in each intermediate enclosure (34, 34') is maintained approximately midway, logarithmically, between the pressures on the opposite sides of the approximately parallel walls (19, 19', 19'') thereof.

6. Apparatus as in Claim 4, wherein the spacing between successive approximately parallel walls (19, 19', 19'') is large enough to avoid streaming of the gas therebetween.

7. Apparatus as in Claim 4, wherein the spacing between the inner and outer walls of the first intermediate enclosure (34') is about 2 to 10 millimeters, and the spacing between the approximately parallel walls of the first additional intermediate enclosure (34') is about 1/2 to 5 millimeters.

8. Apparatus as in Claim 7, wherein the spacing between the approximately parallel walls of each further additional intermediate enclosure (34') is about 1/10 to 2 millimeters.

9. Apparatus as in Claim 4, wherein the openings (20, 20', 20'') are large enough to permit X-rays to pass through in a cone having a total apex angle of about 1 to 10 degrees.

10. Apparatus as in Claim 2, wherein the gas in the drift tube (18) is helium, hydrogen, or a hydrocarbon.

11. Apparatus as in Claim 2, wherein the distance from the near wall (35) to the far wall (22) in the drift tube (18) is about 1/2 to 5 meters.

12. Apparatus as in Claim 2, wherein the thin foils (25, 36) comprise essentially beryllium or a low-Z plastic material.

13. Apparatus as in Claim 12, wherein the thickness of the foils is about 2 to 20 micrometers.

14. Apparatus as in Claim 1, wherein the gas conveyed into the second enclosure (18) is helium, hydrogen, or a hydrocarbon.

15. Apparatus as in Claim 1, wherein the transparent portion (25) of the far wall (22) of the second enclosure (18) comprises a thin foil.

16. Apparatus as in Claim 15, wherein the foil (25) comprises essentially beryllium or a low-Z plastic material.

17. Apparatus as in Claim 16, wherein the thickness of the foil (25) is about 2 to 20 micrometers.

18. Apparatus as in Claim 1, wherein the transparent portion (25) of the far wall (22) of the second enclosure (18) comprises an opening therein; and the gas inside the second enclosure is substantially separated from the air around it; either by a gas curtain passing along the opening; or by the object (26) to which the X-rays are to be provided, or a component associated with the object, placed against the wall and covering the opening.

19. Apparatus as in Claim 1 for obtained EXAFS data of a material sample, comprising also spectral dispersive means (30) in the second enclosure so located as to receive X-rays that pass through the opening (20) and to direct the spectrally resolved X-rays on toward the transparent portion (25) of the far wall adjacent to the object to which the X-rays are to be provided, and wherein the object (26) comprises recording means (12).

20. Apparatus as in Claim 19, wherein the sample (31) is positioned in the second enclosure.

21. Apparatus as in Claim 19, wherein the sample (32) is positioned outside of the second enclosure and between the transparent portion (25) of the far wall (22) and the recording means (12).

22. Apparatus as in Claim 1 or 2, wherein the energy directing means (13) comprises means for directing energy from a laser (27) onto the target (15).

23. Apparatus as in Claim 1 or 2, wherein the energy directing means (13) comprises means for focusing the energy onto a spot on the target (15) having a diameter of about 1 to 200 micrometers.

24. Apparatus as in Claim 1 or 2, wherein the opening (20) in the wall (19) of the first enclosure (16) is about 0.2 to 2 millimeters in diameter.

25. Apparatus as in Claim 1 or 2, wherein the distance between the opening (20) in the wall (19) of the first enclosure (16) and the spot on the target (15) is about 0.2 to 5 centimeters.

26. Apparatus as in Claim 1 or 2, wherein the X-rays produced at the target (15) have energies predominantly of about 0.3 to 2 keV.

**Patentansprüche**

1. Gerät zur Abgabe von Röntgenstrahlen an einen Gegenstand (26), der sich in normaler Umgebung befinden kann, wie Luft mit etwa atmosphärischem Druck, das folgendes umfaßt
—Einrichtungen (13) zum Richten von Energie auf ein Target (15), um Röntgenstrahlen eines gewählten Spektrums und einer gewählten Intensität am Target zu erzeugen,
—eine erste Ummantelung (16) um das Target (15),
—Einrichtungen (17) zur Verringerung der Quantität und damit des Druckes des Gases in der ersten Ummantelung, um darin den Druck im wesentlichen unter dem atmosphärischen Druck zu halten,
—eine zweite Ummantelung (18) nahe der ersten Ummantelung,
—eine Wand (19) zwischen der ersten und der zweiten Ummantelung (16, 18) mit einer Öffnung (20), die groß genug ist, den Durchtritt der Röntgenstrahlen zu gestatten und dennoch klein genug ist, daß die Druckminderungseinrichtungen (17) das Gas aus der ersten Ummantelung (16) wenigstens so schnell abziehen können, als es durch die Öffnung (20) beim gewünschten Druck eintritt,
—Einrichtungen, um ein für Röntgenstrahlen gut durchlässiges Gas (23) zur zweiten Ummantelung (18) wenigstens so rasch zu bringen, als es durch die Öffnung (20) mit einem Druck von etwa 0,9 bis 1 Atmosphäre austritt, und somit diese Ummantelung frei von anderen Gasen hält,
—wobei das Target (15) nahe genug der Öffnung (20) angeordnet und so vorgesehen ist, daß ein wesentlicher Teil der erzeugen Röntgenstrahlen gegen die Öffnung abgestrahlt wird, sie durchsetzen und auf die entferntere Wand (22) der zweiten Ummantelung (18) gerichtet wird, die von der Wand (19) zwischen der ersten und der zweiten Ummantelung entfernt liegt, und
—wobei die entferntere Wand der zweiten Ummantelung, zu der die Röntgenstrahlen wandern, einen Abschnitt (25) hat, der für diese hochdurchlässig ist, so daß der Gegenstand (26), dem die Röntgenstrahlen zugeführt werden sollen, außerhalb der zweiten Ummantelung (18) und nahe des durchlässigen Abschnittes (25) der entfernteren Wand (22) angeordnet ist, und somit die Röntgenstrahlen im wesentlichen unbehindert durch Luft oder andere unerwünschte Beeinflussungen empfangen kann.

2. Gerät zur Abgabe von Röntgenstrahlen an einen Gegenstand, der sich in normaler Umgebung befinden kann, wie Luft mit etwa atmosphärischem Druck, das folgendes umfaßt
—Einrichtungen (13) zum Richten von Energie auf ein Target (15), um Röntgenstrahlen eines gewählten Spektrums und einer gewählten Intensität am Target zu erzeugen,
—eine erste Ummantelung (16) um das Target (15),
—Einrichtungen (17) zum Verringern der Menge und somit des Druckes des Gases in der Ummantelung, um den Druck darin im wesentlichen unter dem atmosphärischen druck zu halten,
—eine mediumdichte Triftröhre (18) als zweite Ummantelung, nahe der ersten Ummantelung, im wesentlichen bei atmosphärischem Druck, die ein Gas enthält, das für Röntgenstrahlen hochdurchlässig ist, mit im wesentlichen Ausschluß anderer Gase,
—eine Wand (19) in der ersten Ummantelung, die der Triftröhre (18) benachbart ist und eine Öffnung hat, die groß genug ist, den Druchtritt der Röntgenstrahlen zu gestatten, jedoch klein genug ist, daß die Druckmindereinrichtungen das Gas aus der ersten Ummantelung (16) wenigstens so schnell abziehen können, als es durch die Öffnung (20) bei gewünschtem Druck eintritt,
—wobei das Target nahe genug der Öffnung angeordnet und so vorgesehen ist, daß es einen wesentlichen Teil der erzeugten Röntgenstrahlen gegen die Öffnung abstrahlt, um sie zu durchsetzen,

—wobei eine nahe Wand (35) in der Triftröhre (18) eine dünne Folie (36) hat, die für Röntgenstrahlen hochdurchlässig ist, und nahe der Öffnung (20) in der Wand der ersten Ummantelung (16) angeordnet ist, damit die die Öffnung (20) durchsetzenden Röntgenstrahlen durch die dünne Folie (36) der nahen Wand (35) gegen eine entferntere Wand (22) der Triftröhre (18) weiterwandern können, die gegenüber der nahen Wand (35) angeordnet ist, und

—wobei die entferntere Wand (22) der Triftröhre, zu der die Röntgenstrahlen wandern, eine dünne Folie (25) hat, die für diese hochdurchlässig ist, so daß der Gegenstand (26), dem die Röntgenstrahlen zugeführt werden sollen, außerhalb der zweiten Ummantelung und der dünnen Folie (25) der entfernteren Wand (22) angeordnet ist und somit die Röntgenstrahlen im wesentlichen unbeeinflußt von Luft und anderen unerwünschten Beeinflussungen empfängt.

3. Gerät nach Anspruch 1 oder 2, mit wenigstens einer Zwischenummantelung (34) nahe der ersten Ummantelung (16), von der ein Teil (19) der Innenwand gemeinsam mit einem Teil der Wand der ersten Ummantelung (16), die die Öffnung (20) hat, ist, mit einer äußeren Wand (19'), die im wesentlichen parallel zur gemeinsamen Wand (19) ist und eine ähnliche Öffnung (20') hat, die mit der Öffnung (20) in der gemeinsamen Wand (19) fluchtet, damit die Röntgenstrahlen durchtreten und zur entfernteren Wand (22) der zweiten Ummantelung (18) wandern können, und mit Einrichtungen (17'), um die Menge und somit den Druck des Gases in der Zwischenummantelung (34) zu verringern, um den Druck zwischen dem Druck in der ersten Ummantelung (16) und dem Druck außerhalb der äußeren Wand (19') zu halten, wobei die Öffnung (20') in der äußeren Wand (19') klein genug ist, daß die Druckminderungseinrichtungen (17') das Gas aus der Zwischenummantelung (34) wenigstens so rasch abziehen können, als es durch die Öffnung (20') bei dem gewünschten Druck eintritt.

4. Gerät nach Anspruch 3, das wenigstens eine zusätzliche und ähnliche Zwischenummantelung (34') zwischen der ersten und der zweiten Ummantelung (16, 18) umfaßt, wobei jedes Paar benachbarter Zwischenummantelungen auf gegenüberliegenden Seiten einer weiteren gemeinsamen Wand (19') und der Öffnung darin angeordnet ist, und alle Öffnungen (20', 20'') mit der Öffnung (20) in der Wand (19) der ersten Ummantelung (16) und dem durchlässigen Abschnitt (36) der nahen Wand (35) der zweiten Ummantelung (18) ausgerichtet sind, und mit Einrichtungen (17'') zur Verringerung der Menge und damit des Druckes des Gases in jeder zusätzlichen Zwischenummantelung vorgesehen sind, um den Druck darin zwischen den Drücken benachbarter Ummantelungen zu halten, wobei die Öffnung (20', 20'') in jeder Wand klein genug ist, daß die Druckmindereinrichtungen das Gas aus jeder Zwischenummantelung (34') wenigstens so rasch abziehen können, als es durch die Öffnung bei dem gewünschten Druck eintritt.

5. Gerät nach Anspruch 4, bei dem der Druck in jeder Zwischenummantelung (34, 34') im wesentlichen in der Mitte, logarithmisch, zwischen den Drücken an den gegenüberliegenden Seiten der ungefähr parallelen Wände (19, 19', 19'') gehalten wird.

6. Gerät nach Anspruch 4, bei dem der Abstand zwischen aufeinanderfolgenden, ungefähr parallelen Wänden (19, 19', 19'') groß genug ist, um ein Strömen des Gases dazwischen zu vermeiden.

7. Gerät nach Anspruch 4, bei dem der Abstand zwischen der inneren und äußeren Wand der ersten Zwischenummantelung (34') etwa 2 bis 10 mm ist und der Abstand zwischen den ungefähr parallelen Wänden der ersten zusätzlichen Zwischenummantelung (34') etwa 0,5 bis 5 mm ist.

8. Gerät nach Anspruch 7, bei dem der Abstand zwischen den ungefähr parallelen Wänden jeder weiteren zusätzlichen Zwischenummantelung (34') etwa 0,10 bis 2 mm ist.

9. Gerät nach Anspruch 4, bei dem die Öffnungen (20, 20', 20'') groß genung sind, damit die Röntgenstrahlen in einem Kegel durchtreten können, der einen Gesamtscheitelwinkel von etwa 1 bis 10° hat.

10. Gerät nach Anspruch 2, bei dem das Gas in der Triftröhre (18) Helium, Wasserstoff oder ein Kohlenwasserstoff ist.

11. Gerät nach Anspruch 2, bei dem der Abstand von der nahen Wand (35) zur entfernteren Wand (22) in der Triftröhre (18) etwa 0,5 bis 5 m ist.

12. Gerät nach Anspruch 2, bei dem die dünnen Folien (25, 36) im wesentlichen Beryllium oder ein Kunststoffmaterial mit niederem Z umfassen.

13. Gerät nach Anspruch 12, bei dem die Dicke der Folien etwa 2 bis 20 µm ist.

14. Gerät nach Anspruch 1, bei dem das in die zweite Ummantelung (18) geförderte Gas Helium, Wasserstoff oder ein Kohlenwasserstoff ist.

15. Gerät nach Anspruch 1, bei dem der durchlässige Abschnitt (25) der entfernteren Wand (22) der zweiten Ummantelung (18) eine dünne Folie umfaßt.

16. Gerät nach Anspruch 15, bei dem die Folie (25) im wesentlichen Beryllium oder ein Kunststoffmaterial mit niederem Z umfaßt.

17. Gerät nach Anspruch 16, bei dem die Dicke der Folie (25) etwa 2 bis 20 µm ist.

18. Gerät nach Anspruch 1, bei dem der durchlässige Abschnitt (25) der entfernteren Wand (22) der zweiten Ummantelung (18) eine Öffnung umfaßt und das Gas innerhalb der zweiten Ummantelung im wesentlichen von der umgebenden Luft getrennt ist, entweder durch einen Gasvorhang, der an der Öffnung vorbetritt, oder durch den Gegenstand (26), zu dem die Röntgenstrahlen geführt werden sollen, oder eine mit dem Gegenstand verbundene Komponente, die an der Wand angeordnet ist und die Öffnung abdeckt.

19. Gerät nach Anspruch 1, um EXAFS-Daten einer Materialprobe zu erhalten, das auch Spektraldispersionseinrichtungen (30) in der zweiten Ummantelung aufweist, die so angeordnet sind, daß sie die durch die Öffnung (20) durchtretenden Röntgenstrahlen empfangen und die spektralaufgelösten Röntgenstrahlen weiter auf den durchlässigen Abschnitt (25) der entfernteren Wand nahe dem Gegenstand richten, dem die Röntgenstrahlen zugeführt werden sollen, und bei dem der Gegenstand (26) Aufnahmeeinrichtungen (12) aufweist.

20. Gerät nach Anspruch 19, bei dem die Probe (31) in der zweiten Ummantelung angeordnet ist.

21. Gerät nach Anspruch 19, bei dem die Probe (32) außerhalb der zweiten Ummantelung und zwischen dem durchlässigen Abschnitt (25) und der entfernteren Wand (22) und den Aufnahmeeinrichtungen (12) angeordnet ist.

22. Gerät nach Anspruch 1 oder 2, bei dem die Energierichteinrichtungen (13) Einrichtungen aufweisen, um Energie von einem Laser (27) auf das Target (15) zu richten.

23. Gerät nach Anspruch 1 oder 2, bei dem die Energierichteinrichtungen (13) Einrichtungen zum Fokussieren der Energie auf einen Punkt des Targets (15) aufweisen, der einen Durchmesser von etwa 1 bis 200 µm hat.

24. Gerät nach Anspruch 1 oder 2, bei dem die Öffnung (20) in der Wand (19) der ersten Ummantelung (16) einen Durchmessr von etwa 0,2 bis 2 mm hat.

25. Gerät nach Anspruch 1 oder 2, bei dem der Abstand zwischen der Öffnung (20) in der Wand (19) der ersten Ummantelung (16) und dem Punkt auf dem Target (15) etwa 0,2 bis 5 cm ist.

26. Gerät nach Anspruch 1 oder 2, bei dem die am Target (15) erzeugten Röntgenstrahlen hauptsächlich Energien von etwa 0,3 bis 2 keV haben.

**Revendications**

1. Appareil pour projeter des rayons X sur un objet (26) pouvant se trouver dans des conditions ambiantes, telles que de l'air à une pression voisine de la pression atmosphérique, comprenant:

des moyens (13) pour diriger l'énergie contre une cible (15) et produire des rayons X d'intensité et de spectre choisis sur la cible,

une première enceinte (16) entourant la cible (15),

des moyens (17), pour abaisser la quantité, et donc la pression du gaz dans la première enceinte et y maintenir une pression inférieure à la pression atmosphérique,

une seconde enceinte (18) adjacente à la première enceinte,

une paroi (19) entre les première et seconde enceintes (16, 18) présentant une ouverture (20) suffisante au passage des rayons X mais assez petite pour que les moyens de réduction de pression (17) puissent évacuer le gaz de la première enceinte (16), tout au moins à raison de ce qui pénètre par l'ouverture (20), et maintenir la pression choisie,

des moyens pour introduire un gaz (23) fortement transparent aux rayons X dans la seconde enceinte (18) à un débit au moins suffisant pour compenser la perte à travers l'ouverture (20), sous une pression d'environ 0,9 à 1 atmosphère et ainsi maintenir cette enceinte libre d'autres gaz,

la cible (15) étant située assez près de l'ouverture (20) et positionnée de manière à projeter une portion substantielle des rayons X engendrés vers cette ouverture, à les faire traverser celle-ci et à les envoyer sur une paroi distale (22) de la seconde enceinte (18) et placée, entre la première et la seconde enceinte à une certain distance de la paroi (19), et

la paroi distante de la seconde enceinte, sur laquelle les rayons X sont projetés, présentant une portion hautement transparente à ceux-ci, de manière que l'objet (26) auquel les rayons X sont destinés puisse être placé au dehors de la seconde enceinte (18) en position adjacente à la portion transparente (25) de la paroi distante (22) et recevoir des rayons X n'ayant pratiquement pas été arrêtés par l'air ou par tout autre matière gênante.

2. Appareil pour projeter des rayons X sur un objet (26) pouvant se trouver dans des conditions ambiantes, telles que de l'air à une pression voisine de la pression atmosphérique, comprenant:

des moyens (13) pour diriger l'énergie contre une cible (15) et produire des rayons X d'intensité et de spectre choisis sur la cible,

une première enceinte (16) entourant la cible (15),

des moyens (17) pour abaisser la quantité, et donc la pression du gaz dans la première enceinte et y maintenir une pression inférieure à la pression atmosphérique,

un tube à dérive (18) étanche aux fluides, en tant que seconde enceinte adjacente à la première enceinte, contenant un gaz hautement transparent aux rayons X à pression pratiquement atmosphérique et excluant la présence d'autres gaz,

une paroi (19) dans la première enceinte en position adjacente au tube à dérive (18) présentant une ouverture (20) suffisante au passage des rayons X mais assez petite pour que les moyens de réduction de pression (17) puissent évacuer le gaz de la première enceinte (16), tout au moins à raison de ce qui pénètre par l'ouverture (20), et maintenir la pression choisie, la cible étant située assez près de l'ouverture et positionnée de manière à projeter une portion substantielle des rayons X engendrés vers cette ouverture et à les faire passer à travers celle-ci,

une paroi proximale (35) dans le tube à dérive (18) présentant une lame mince (36) hautement transparente aux rayonx X et en position adjacente à l'ouverture (20) de la paroi de la première enceite (16), de manière que les rayons X traversant cette ouverture (20) passent à travers la lame mince (36) de la paroi proximale (35) en direction d'une paroi distale (22) du tube à dérive (18) placé en face de la paroi proximale (35), et

la paroi distale (22) du tube à dérive auquel parviennent les rayons X présentant une lame mince (25) hautement transparente à ceux-ci, de manière que l'objet (26) auquel les rayons X sont destinés puisse être placé au dehors de la seconde enceinte en position adjacente à la lame mince (25) de la paroi distante (22) et recevoir ainsi des rayons X n'ayant pratiquement pas été arrêtés par l'air ou par toute autre matière gênante.

3. Appareil suivant les revendications 1 ou 2, comprenant aussi au moins une enceinte intermédiaire (34) contigue à la première enceinte (16) présentant une paroi interne dont une portion (19) est commune avec une portion de la paroi de la première enceinte (16), munie d'une ouverture (20), présentant une paroi externe (19') approximativement parallèle à la paroi commune (19) et munie d'une ouverture similaire (20') entre celles-ci et coïncidant avec l'ouverture (20) de la paroi commune (19), de manière que les rayons X les traversent et parviennent à la paroi distale (22) de la seconde enceinte (18); et des moyens (17') pour abaisser la quantité, et donc la pression de gaz dans l'enceinte intermédiaire (34) et y maintenir une pression moyenne entre celle de la première enceinte (16) et la pression extérieure à la paroi externe (19'); l'ouverture (20') de la paroi externe (19') étant assez petite pour que les moyens (17') de réduction de pression puissent évacuer le gaz de l'enceinte intermédiaire (34), tout au moins à raison de ce qui pénètre par l'ouverture (20') sous la pression choisie.

4. Appareil suivant la revendication 3, comprenant encore au moins une enceinte supplémentaire similaire (34') entre la première et la seconde enceinte (16, 18), chaque paire d'enceintes contigues étant disposées sur les faces opposées d'une paroi commune (19') additionnelle et d'une ouverture dans celle-ci, et toutes les ouvertures (20', 20'') étant placées entre les ouvertures 20) dans la paroi (19) de la première enceinte (16) et la portion transparente (36) de la paroi proximale (35) de la seconde enceinte (18), et en coïncidence avec celles-ci; et des moyens (17'') pour réduire la quantité, et donc la pression du gaz dans chacune des enceintes mitoyennes de manière que celle-ci soit maintenue à une valeur intermédiaire entre celles des enceintes contigues; les ouvertures (20', 20'') dans chacune des paroi étant assez petite pour que les moyens de réduction de pression puissent évacuer le gaz dans chaque enceinte intermédiaire (34'), tout au moins à raison de ce qui y pénètre par l'ouverture sous la pression désirée.

5. Appareil suivant la revendication 4, dans lequel on maintient la pression dans chaque enceinte mitoyenne (34, 34') à une valeur approximativement moyenne, au point de vue logarithmique, entre celles qui règnent sur les faces opposées des paroi approximativement parallèles (19, 19', 19'') de celles-ci.

6. Appareil suivant la revendication 4, dans lequel l'espacement entre les paroi successives approximativement parallèles (19, 19', 19'') est suffisant pour éviter un engorgement par le gaz circulant entre celles-ci.

7. Appareil suivant la revendication 4, dans lequel l'intervalle entre les parois interne et externe de la première enceinte intermédiaire (34') est d'environ 2 à 10 mm, et l'intervalle entre les paroi approximativement parallèles de la première enceinte intermédiaire additionnelle (34') est d'environ 0,5 à 5 mm.

8. Appareil suivant la revendication 7, dans lequel l'intervalle entre les paroi approximativement parallèles de chaque enceinte intermédiaire supplémentaire (34') est d'environ 0,1 à 2 mm.

9. Appareil suivant la revendication 4, dans lequel les ouvertures (20, 20', 20'') sont assez grandes pour que les rayons X les traversant suivant un cône d'angle solide d'environ 1 à 10°.

10. Appareil suivant la revendication 2, dans lequel le gaz du tube à dérive (18) est de l'hélium, de l'hydrogène ou un hydrocarbure.

11. Appareil suivant la revendication 2, dans lequel la distance de la paroi proche (35) à la paroi éloignée (22) dans le tube à dérive (18) est d'environ 0,5 à 5 m.

12. Appareil suivant la revendication 2, dans lequel les lames minces (25, 36) comportent essentiellement du beryllium ou un matériau plastique à coefficient Z inférieur.

13. Appareil suivant la revendication 12, dans lequel l'épaisseur de la lame est de 2 à 20 µm.

14. Appareil suivant la revendication 1, dans lequel le gaz introduit dans la seconde enceinte est de l'hélium, de l'hydrogène ou un hydrocarbure.

15. Appareil suivant la revendication 1, dans lequel la portion transparente (25) de la paroi distale (22) de la seconde enceinte (18) comporte une lame mince.

16. Appareil suivant la revendication 15, dans lequel la lame mince 5 comporte essentiellement du beryllium ou un plastique à coefficient Z de faible valeur.

17. Appareil suivant la revendication 16, dans lequel l'épaisseur de la lame (25) est de 2 à 20 µm.

18. Appareil suivant la revendication 1, dans lequel la portion transparente (25) de la paroi distante (22) de la seconde enceinte (18) comprend une ouverture pratiquée dans celle-ci; et le gaz enfermé dans la seconde enceinte est pratiquement protégé de l'air ambiant; soit, par un rideau de gaz s'écoulant le long de l'ouverture; soit par l'objet (26) auquel les rayons X sont destinés, soit encore par un composant de cet objet placé contre la paroi et recouvrant l'ouverture.

19. Appareil suivant la revendication 1, destiné à fournir des mesures EXAFS sur un échantillon de matériau, comprenant aussi des moyens de dispersion spectrale (30) dans la seconde enceinte placés de manière à recevoir les rayons X traversant l'ouverture (20) et à projeter les rayons X ainsi dispersés spectralement sur la portion transparente (25) de la paroi éloignée adjacente à l'objet auquel les rayons X sont destinés, et dans lequel l'objet (26) comprend des moyens (12) d'enregistrement.

20. Appareil suivant la revendication 19, dans lequel l'échantillon (31) est placé dans la seconde enceinte.

21. Appareil suivant la revendication 19, dans lequel l'échantillon (32) est placé hors de la seconde enceinte, entre la partie transparente (25) de la paroi éloignée (22) et les moyens d'enregistrement (12).

22. Appareil suivant les revendications 1 ou 2, dans lequel les moyens (13) pour diriger l'énergie comprennent des moyens pour projeter l'énergie d'un laser (27) sur une cible (15).

23. Appareil suivant les revendications 1 ou 2, dans lequel les moyens (13 pour diriger l'énergie comprennent des moyens pour concentrer l'énergie sur un point de la cible (15) dont le diamètre est de 1 à 200 µm.

24. Appareil suivant les revendications 1 ou 2, dans lequel l'ouverture (20) de la paroi (19) de la première enceinte (19) à un diamètre de 0,2 à 2 mm.

25. Appareil suivant les revendications 1 ou 2, dans lequel la distance entre l'ouverture (20) de la paroi (19) de la première enceinte (16) et le point sur la cible (15) est d'environ 0,2 à 5 cm.

26. Appareil suivant les revendications 1 ou 2, dans lequel les rayons X produits sur la cible ont une énergie prédominante de 0,3 à 2 KeV.

FIG. 3

FIG. 1

FIG. 2